# EUROPÄISCHE PATENTSCHRIFT

(11) **EP 1 894 462 B1**
(45) Veröffentlichungstag und Bekanntmachung des Hinweises auf die Patenterteilung: **10.11.2010**
(21) Anmeldenummer: 07110446.7
(22) Anmeldetag: 18.06.2007
(51) Int. Cl.: A01D 41/14

(54) **Landwirtschaftliches Trägerfahrzeug**
Agricultural carrier vehicle
Convoyeur agricole

(30) Priorität: 28.08.2006 DE 102006040106
(43) Veröffentlichungstag der Anmeldung: 05.03.2008
(73) Patentinhaber: CLAAS Selbstfahrende Erntemaschinen GmbH, 33428 Harsewinkel (DE)
(72) Erfinder: Haffert, Andreas, Dr., 33334, Gütersloh (DE); Frerichs, Ludger, Dr., 48336, Sassenberg (DE); Erdmann, Hubert, 33739 Bielefeld (DE)
(74) Vertreter: Schütte, Hartmut

(56) Entgegenhaltungen:
- EP-A- 1 468 598
- EP-A1- 1 287 732
- DE-A1- 3 826 612
- DE-A1- 19 958 280
- DE-A1-102004 059 038
- DE-A1-102005 004 212

## Beschreibung

Die Erfindung betrifft ein selbstfahrendes landwirtschaftliches Trägerfahrzeug, insbesondere einen Feldhäcksler mit einem von einer Arbeits- in eine Transportposition verschwenkbares Erntevorsatzgerät nach dem Oberbegriff des Anspruchs 1.

Trägerfahrzeuge wie etwa selbstfahrende Erntemaschinen werden mit lösbaren Erntevorsätzen zum Ernten und Einbringen von Erntegut ausgestattet. Aufgrund des Wandels zu immer größeren Bearbeitungsflächen werden zunehmend immer leistungsstärkere Erntemaschinen verwendet, welche mit gleichfalls zunehmend breiteren und schwereren Erntevorsätzen ausgestattet sind. Im Gegensatz zu Mähdreschern, die in der Regel starre Schneidwerke aufweisen und für den Transport auf Transportwagen verladen werden, sind Feldhäcksler mit klappbaren Erntevorsätzen ausgestattet, die zum Straßentransport mit unterschiedlichsten Mechanismen verklappt werden und für gewöhnlich am vorderen Teil des Feldhäckslers verbleiben. Bei den bekannten Feldhäckslern kommt es aufgrund von gesetzlichen Limitierungen zu Grenzen der zulässigen Achsbelastungen. Insbesondere führt bereits der herkömmliche Aufbau eines Feldhäckslers zu einer Verlagerung des Massenschwerpunktes in dessen vorderen Bereich, was zudem das Fahrverhalten insbesondere bei höheren Geschwindigkeiten verschlechtert. Um solche Nachteile vermeiden zu können, wurden den immer breiteren Erntevorsätzen einerseits feste Stützräder oder separate Stützwagen zugeordnet, um die Belastung der vorderen Räder des Feldhäckslers im Arbeitsbetrieb bzw. während des Straßenbetriebs zu verringern. Andererseits werden die klappbaren und während des Straßentransportes von der Erntemaschine vor sich hergeschobenen Erntevorsätze in der Regel vertikal nach oben verklappt, um den gesetzlich vorgeschriebenen maximalen Überstand von 3 Metern vom Lenkrad der Erntemaschine nach vorn in Fahrtrichtung gesehen, einhalten zu können.

In der EP1046329A2 wird vorgeschlagen, dem Erntevorsatzgerät ein zusätzliches Rad zu dessen Abstützung zuzuordnen, das beim Straßentransport der Erntemaschine in Bodenkontakt gebracht werden kann. Dadurch bedingt, wird die Erntemaschine im vorderen Bereich entlastet, so dass die gesetzliche Regelung der Achslastbelastung erleichtert bzw. dann erreicht wird, In einem Ausführungsbeispiel ist das zusätzliche Rad an einem separaten Wagen angeordnet, der unter das Erntevorsatzgerät schiebbar und dort befestigt ist. Die Befestigung des Wagens und demnach auch die Einleitung der Stützkräfte erfolgt an einem Getriebegehäuse einer Einzugs- und Mähtrommel, das sich von einem unterem Trägerrahmen des Erntevorsatzgerätes nach vorne erstreckt.

Nachteilig an dieser Ausführung ist, dass einerseits ein solches Getriebegehäuse, ohne dessen kostenaufwendige Verstärkung, nicht zur Aufnahme größerer Kräfte dimensioniert ist, die insbesondere beim Überfahren von Straßenunebenheiten auftreten. Ein weiterer Nachteil ergibt sich daraus, dass zur Einhaltung des maximalen Überstandes von 3 Metern vom Lenkrad der Erntemaschine aus gesehen in Fahrtrichtung, die immer breiter dimensionierten Erntevorsatzgeräte, zwangsläufig, weil sie von der Erntemaschine im Straßenbetrieb vor sich her geschoben werden, vertikal nach oben verklappt werden müssen, was eine erhebliche Einschränkung des Sichtfeldes des Fahrers der Erntemaschine während des Straßenbetriebes bedeutet, Im weiteren müssen teilweise aufwendige Umbauarbeiten zum Verbringen des Erntevorsatzgerätes von einer Arbeits- in eine Transportbetriebsposition vorgenommen werden.

Aus der DE 10 2004 059 038 A1 ist eine Kombination aus einer Erntemaschine, einem Erntevorsatz und einem Wagen zur Abstützung des Erntevorsatzes bekannt geworden, wobei der Wagen ein Gestell und mindestens ein sich vom Gestell nach unten erstreckendes Rad aufweist und somit zur Gewichtsentlastung der vorderen Räder der selbstfahrenden Erntemaschine im Straßenbetrieb beiträgt, wobei die Erntemaschine den Wagen im Straßenbetrieb vor sich her schiebt. Aber auch hier ist es als nachteilig anzusehen, dass, um den maximal erlaubten Überstand von 3m vom Lenkrad der Erntemaschine aus nach vom in Fahrtrichtung gesehen, einhalten zu können, der Erntevorsatz vertikal nach oben verklappt werden muss. Auch dies bedingt bei Erntevorsätzen mit Arbeitsbreiten von über 10 Metern eine erhebliche Beschränkung des Sichtfeldes des Fahrers während des Straßenbetriebes und zudem ein mögliches Aufschaukeln des Erntevorsatzes beim Überfahren von Straßenunebenheiten, was zur Verschlechterung der Manövrierbarkeit der Erntemaschine führt. Schließlich muss der Fahrer der Erntemaschine von der Maschine absteigen, um das Erntevorsatzgerät mittels unterschieben des Stützwagens in die Straßenbetriebsposition zu verbringen. Auch hier sind teilweise aufwendige Umbauarbeiten vom Fahrer der Erntemaschine vorzunehmen.

Aus der EP-A-1468598 geht ein selbstfahrender Feldhäcksler mit positionierbarer Fahrerkabine hervor. Die Fahrerkabine ist von einer Straßen- bzw. Transport-Betriebsposition in eine Häckselbetriebsposition und umgekehrt bewegbar. In der Transport-Betriebsposition befindet sich ein für den Häckselvorgang geeignetes Vorsatzgerät in einer hochgeklappten Position. Dabei erfolgt eine erhebliche Belastung der nächst dem Vorsatzgerät befindlichen Achse des Feldhäckslers.

Demzufolge liegt der Erfindung die Aufgabe zugrunde, die beschriebenen Nachteile des Standes der Technik zu vermeiden und insbesondere die Einhaltung der gesetzlichen Vorschriften bezüglich der Achslastverteilung und des maximalen Überstandes von 3 Metern vom Lenkrad des Trägerfahrzeuges aus nach vom in Fahrtrichtung gesehen, während des Straßenbetriebs von landwirtschaftlichen Trägerfahrzeugen mit Erntevorsatzgeräten großer Arbeitsbreite und hohem Gewicht zu ermöglichen, ohne dass der Fahrer für Umbauarbeiten am Erntevorsatzgerät die Fahrerkabine verlassen muss und Sichtfeldbeeinträchtigungen im Transportbetrieb in Kauf nehmen muss.

Diese Aufgabe wird erfindungsgemäß durch die kennzeichnenden Merkmale des Patentanspruchs 1 gelöst, während in den weiteren Patentansprüchen Merkmale aufgeführt sind, die diese Lösung in vorteilhafter Weise weiterentwickeln.

Indem wenigstens eine Adaptiervorrichtung ausgelegt ist, beim Verschwenken des Erntvorsatzgerätes von einer Arbeits- in eine Transportbetriebsposition eine Verbindung des Erntevorsatzgerätes zum Einzugsgehäuse aufrechtzuerhalten und wobei die Erntemaschine mittels dieser Adaptiervorrichtung im Transportbetrieb das Erntevorsatzgerät zieht, ist vorteilhaft sichergestellt, dass einerseits Umbauarbeiten bzw. das Lösen des Erntevorsatzgerätes für den Wechsel vom Arbeitsbetrieb in den Transportbetrieb nicht mehr nötig sind und andererseits die Einhaltung der gesetzlichen Limitierungen der Achslast wie auch des 3 Meter Überstandes vom Lenkrad aus in Fahrtrichtung gesehen, auch bei Erntevorsatzgeräten sehr großer Arbeitsbreite, stets erreichbar ist.

In vorteilhafter Weiterbildung der Erfindung befindet sich die wenigstens eine Adaptiervorrichtung oberhalb der Einzugsöffnung des Einzugsgehäuses, so dass der sich dort befindende Freiraum genutzt werden kann.

Dadurch, dass das Erntevorsatzgerät mittels der Adaptiervorrichtung gleichzeitig um eine vertikale und eine horizontale Achse verschwenkbar ist, kann ein sicherer Transportbetrieb des Erntevorsatzgerätes durch das landwirtschaftliche Trägerfahrzeug auch beim Durchfahren von Kurven und beim Überqueren von Bodenunebenheiten erreicht werden. Vorzugsweise ist dafür die Adaptiervorrichtung als Sattelkupplung ausgeführt, welche über eine horizontal gelagerte Gelenkvorrichtung mit einem mit dem Erntevorsatzgerät in Verbindung stehenden Tragrahmen verbunden ist, so dass eine außerordentlich große Wendigkeit im Transportbetrieb erreicht werden kann.

Indem dem Erntevorsatzgerät eine diesem gegenüber dem Einzugsgehäuse um nahezu 90° aus seiner Arbeitsstellung hochschwenkbare Verstelleinrichtung zugeordnet ist, kann auf technisch einfache Weise das Verschwenken des Erntevorsatzgerätes von einer Arbeits- in eine Transportbetriebsposition erreicht werden.

In besonders einfacher Weise besteht dabei die Verstelleinrichtung aus Kolben-Zylindern, die mit ihren Enden am Einzugsgehäuse und am Tragrahmen befestigt sind, wobei die Verstelleinrichtung während des Transportbetriebs vom Tragrahmen, gelöst ist, so dass einerseits die Verstellung von der Fahrerkabine ausgeführt werden kann und andererseits die Wendigkeit des Erntevorsatzgerätes im Transportbetrieb nicht beeinträchtigt wird.

Erfindungsgemäß ist das Erntevorsatzgerät aus einem Basisteil und schwenkbar daran befestigten Seitenteilen aufgebaut. Vorzugsweise ist dabei das Basisteil im Wesentlichen mittig, sich über die gesamte Fahrzeugbreite der landwirtschaftlichen Erntemaschine erstreckend, angebracht, so dass einerseits ein wesentlicher Teil der Arbeitsbreite mit einem einteiligen Rahmenaufbau abgedeckt werden kann und andererseits die Einkopplung des Antriebes von dem landwirtschaftlichen Trägerfahrzeug in das Erntevorsatzgerät mit einem solchen Basisteil leichter bewerkstelligt werden kann. Eine umso stabilere bzw, kippsichere Aufhängung des Vorsatzgerätes am Trägerfahrzeug ist damit realisierbar, Im weiteren bleibt die gesetzlich vorgegebene Transportbreite einhaltbar.

Dadurch, dass das Basisteil um eine nahezu horizontale und quer zum Trägerfahrzeug orientierte Schwenkachse in vertikaler Richtung verschwenkbar am Trägerfahrzeug angelenkt ist und wobei während der Schwenkbewegung die Seitenteile zugleich in eine in Längsrichtung des Trägerfahrzeugs weisende Position verschwenkt werden, ist sichergestellt, dass das gesamte Erntevorsatzgerät eine das Gewicht optimal verteilende Transportbetriebsposition einnimmt und ein sicherer Transport durch das landwirtschaftliche Trägerfahrzeug erreicht wird, Vorzugsweise sind in der Transportposition die Seitenteile dem Basisteil vorgeordnet und zumindest teilweise unterhalb des Basisteils angeordnet, so dass die gesetzlich vorgegebene Transportbreite nicht überschritten wird.

In einer vorteilhaften Weiterbildung der Erfindung sind die Schwenkebenen des Basisteils und/oder der Seitenteile in der Transportposition vertikal nach oben gerichtet, so dass das Anbringen von Schutzeinrichtungen wie Seitenplanen oder anderen Abdeckvorrichtungen zum Verkleiden des Erntevorsatzgerätes unterbleiben kann und dem Fahrer ein größerer Aufwand zur Anbringung einer solchen Schutzeinrichtung erspart bleibt

Indem dem Erntevorsatzgerät wenigstens ein um eine vertikale Drehachse frei pendelndes und während des Transportbetriebes mit dem Boden in Kontakt stehendes Stützrad zugeordnet ist, wird das Erntevorsatzgerät auf technisch einfache Weise abgestützt und ist von dem landwirtschaftlichen Trägerfahrzeug ziehbar. Zusätzlich wird die Entlastung der Räder der landwirtschaftlichen Erntemaschine erreicht, so dass beim Befahren einer öffentlichen Straße die Einhaltung der maximal zulässigen Achslasten auch bei Erntevorsätzen großer Arbeitsbreite stets erreichbar ist.

Erfindungsgemäß finden wenigstens zwei Stützräder Verwendung, die jeweils an den Seitenteilen angebracht sind, so dass die Stützräder auch während des Verschwenkens des Erntevorsatzgerätes von einer Arbeits- in eine Transportbetriebsposition das Erntevorsatzgerät abstützen.

Dadurch, dass der landwirtschaftlichen Erntemaschine eine Fahrerkabine zugeordnet ist, die aus zumindest einer Arbeitsbetriebsposition in eine Transportbetriebsposition und umgekehrt bewegbar ist, wird sichergestellt, dass das landwirtschaftliche Trägerfahrzeug in zwei Fahrtrichtungen betrieben werden kann und der Fahrer freie Sicht nach vorn in die jeweilige Fahrtrichtung hat. Vorzugsweise erfolgt die Änderung der Position durch Verschieben und/oder Verschwenken der Fahrerkabine. Die Kabine ist dabei in jeder Position mit dem landwirtschaftlichen Trägerfahrzeug verbunden.

In einer weiteren Ausgestaltung der Erfindung ist die Fahrerkabine in der Transportbetriebsposition etwa mittig zwischen den Achseinheiten angeordnet, so dass die auf den Fahrer während der Transportfahrt einwirkenden Schwingungen gemindert sind.

Zur gleichmäßigen Verteilung der Lasten auf die vorhandenen Achsen des landwirtschaftlichen Trägerfahrzeuges ist das Erntevorsatzgerät im Bereich der ersten Achseinheit angeordnet, wobei sich gleichzeitig die wenigstens eine Antriebseinheit im Bereich einer weiteren Achseinheit befindet. Diese Anordnung bewirkt vorteilhaft eine besseren Fahrkomfort. Vorzugsweise besteht die Antriebseinheit aus einem Motor, einem Getriebe und einem Kühler.

Damit insbesondere Auswurfkrümmer mit großer Länge nicht mit hohem technischen Aufwand verklappbar oder einziehbar ausgeführt sein müssen, um die gesetzlichen Bestimmungen hinsichtlich der Transportbreite im Straßenverkehr einhalten zu können, wird vorteilhaft im Transportbetrieb der Auswurfkrümmer auf dem gezogenen Erntevorsatzgerät abgestützt.

Weitere vorteilhafte Ausgestaltungen sind Gegenstand weiterer Unteransprüche und werden anhand der nachfolgenden Zeichnungen näher erläutert

Es zeigt:
- Figur 1:: eine Seitenansicht des als Feldhäcksler ausgeführten landwirtschaftlichen Trägerfahrzeuges mit einem Teilschnitt durch die Funktionsbaugruppen
- Figur 2:: eine schematische Draufsicht auf das als Feldhäcksler ausgeführte landwirtschaftliche Trägerfahrzeug mit ausgeklappten Erntevorsatzgerät in Arbeitsbetriebsposition

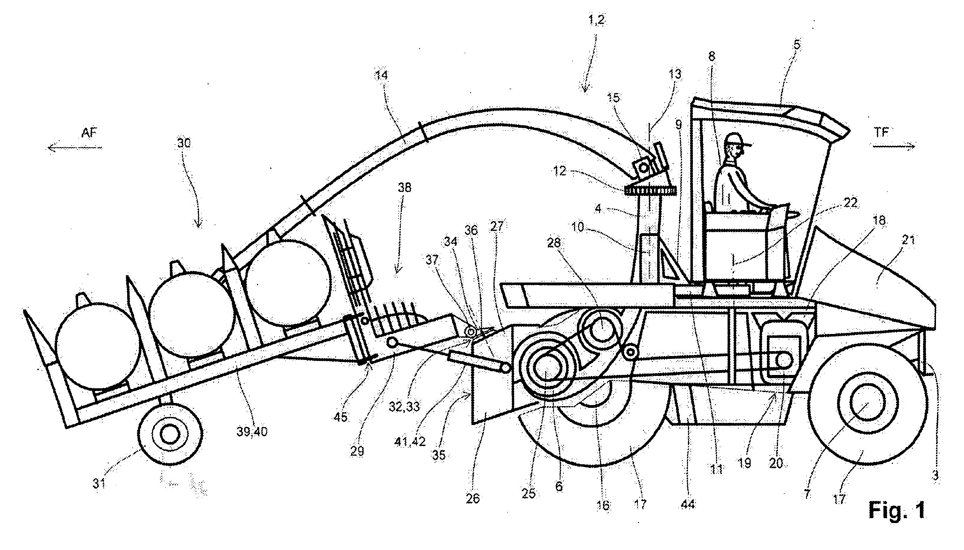

Das in Fig. 1 als selbstfahrender Feldhäcksler 1 ausgeführte landwirtschaftliche Trägerfahrzeug 2 zeigt ein Fahrgestell 3, auf dem eine Fahrerkabine 4 angeordnet ist. Neben der Fahrerkabine 4 ist auf dem Fahrgestell 3 das obere Ende eines aufsteigenden Auswurfschachtes 5 angeordnet, der sich von einer Häckseltrommel 6 innerhalb des Fahrgestells 3 bis oberhalb des Fahrgestells 3 erstreckt. Die Fahrerkabine 4 steht in einer Straßen- bzw. Transportbetriebsposition nahezu mittig zwischen einer ersten Achseinheit 7 und dem Auswurfschacht 5 , wobei die Blickrichtung des Fahrers 8 in Richtung der ersten Achseinheit 7 gerichtet ist. Die Fahrerkabine 4 ist auf einer Schwenkvorrichtung 9 angebracht, die um eine vertikale Drehachse 10 horizontal schwenkbar ist. Die Schwenkvorrichtung 9 ist als längenveränderlicher gerader Schwenkarm 11 ausgeführt, an dessen äußeren Ende die Fahrerkabine 4 um die vertikale Drehachse 10 drehbar gelagert ist. Die Drehachse 10 und die Schwenkvorrichtung 9 liegen vor dem Auswurfschacht 5, so dass beim Verschwenken der Fahrerkabine um 180° um den Auswurfschacht 5 herum weder die Fahrerkabine 4 noch die Schwenkvorrichtung 9 den Auswurfschacht 5 berühren bzw. einen Sicherheitsabstand unterschreiten.
Auf dem Auswurfschacht 5 ist ein mit einem Drehkranz 12 um eine vertikale Drehachse 13 drehbarer Auswurfkrümmer 14 angeflanscht, der zusätzlich um eine horizontale Achse 15 in der Höhe verstellbar ist. Denkbar ist, dass dem Trägerfahrzeug 2 zwei Fahrerkabinen 4 zugeordnet sind.

Das Trägerfahrzeug 2 wird im Arbeitsbetrieb vorzugsweise in einer Arbeitsfahrtrichtung AF gefahren, selbstverständlich kann das Trägerfahrzeug 2 zum Rangieren rückwärts in die entgegengesetzte Richtung fahren.

Das Fahrgestell 3 des Trägerfahrzeuges 2 wird von der ersten Achseinheit 7 und einer weiteren Achseinheit 16 getragen. Dabei weist die erste Achseinheit 7 umfangsmäßig kleinere Räder 17 auf als die weitere Achseinheit 16. Im Bereich der ersten Achseinheit 7 befindet sich eine als Verbrennungsmotor 18 ausgeführte Antriebseinheit 19, ein Getriebe 20 und ein Kühlsystem 21. Der größte Anteil der Last der Antriebseinheit 19 ruht auf der ersten Achseinheit 7, wobei sich der Schwerpunkt der Antriebseinheit 19 insgesamt bedingt durch die Anordnung des Motors 18 und des Getriebes 20 in etwa auf Höhe der ersten Achseinheit 7 befindet. Denkbar ist, dass dem Trägerfahrzeug 2 wenigstens zwei Antriebseinheiten 19 , vorzugsweise Verbrennungsmotoren 18 zugeordnet sind, um auch größere Leistungsreserven für den Arbeitsbetrieb bereitstellen zu können.

Der weiteren Achseinheit 16 ist eine Funktionsbaugruppe 25 zugeordnet, welche ein Einzugsgehäuse 26 und einen darin eingefügten Einzugsschacht 27 umfasst. In dem dem Einzugsschacht 27 nachgeordneten annähernd vertikal verlaufenden Auswurfschacht 5 befinden sich nicht dargestellte Einzugs- und Vorpresswalzen. Den Einzugs- und Vorpresswalzen nachgeordnet sind eine Häckseltrommel 6, ein nicht dargestellter Corn-Cracker sowie ein Nachbeschleuniger 28, die mittels der Antriebseinheit 19 angetrieben werden. Es liegt im Bereich der Erfindung, dass dem Auswurfschacht 5 weitere Arbeitsorgane zugeordnet sind.

Dem Einzugsschacht 27 ist ein, einen Tragrahmen 29 aufweisendes, mehrteilig ausgeführtes Erntevorsatzgerät 30 großer Arbeitsbreite zugeordnet. In der Regel sind Erntevorsatzgeräte 30 wie im dargestellten Ausführungsbeispiel mit unterschiedlichsten Klapp-Mechanismen ausgestattet, um im Straßenbetrieb für gewöhnlich im Bereich des Einzugsgehäuses 26 des Trägerfahrzeuges 2 verbleiben zu können. Bekannt ist auch den immer breiteren Erntevorsätzen 30 feste Stützräder 31 oder separate Stützwagen zuzuordnen, um die Belastung der Räder 17 der weiteren Achseinheit 16 des Trägerfahrzeuges 2 im Arbeitsbetrieb bzw. während des Straßenbetriebs zu verringern, Andererseits werden die klappbaren und während des Straßentransportes von dem Trägerfahrzeug 2 vor sich hergeschobenen Erntevorsätze 30 in der Regel vertikal nach oben verklappt, um den gesetzlich vorgeschriebenen maximalen Überstand von 3 Metern vom Lenkrad des Trägerfahrzeuges 2 nach vorn in Fahrtrichtung gesehen, einhalten zu können. Dies bedingt bei Erntevorsätzen 30 mit Arbeitsbreiten von über 10 Metern eine erhebliche Beschränkung des Sichtfeldes des Fahrers 8 während des Straßenbetriebes und zudem ein mögliches Aufschaukeln des Erntevorsatzes 30 beim Überfahren von Straßenunebenheiten, was zur Verschlechterung der Manövrierbarkeit des Trägerfahrzeuges 2 führt. Zudem sind teilweise aufwendige Umbauarbeiten vom Fahrer 8 des Trägertahrzeuges 2 vorzunehmen, um das Erntevorsatzgerät 30 von einer Arbeitsbetriebs- in eine Transportbetriebsposition zu verbringen.

Erfindungsgemäß ist daher dem Trägerfahrzeug 2 wenigstens eine das Erntevorsatzgerät 30 und das Einzugsgehäuse 26 verbindende, als an sich bekannte lösbare Sattelkupplung 32 ausgeführte Adaptiervorrichtung 33 zugeordnet, die über eine horizontal gelagerte Gelenkvorrichtung 34 mit einem mit dem Erntevorsatzgerät 30 in Verbindung stehenden Tragerrahmen 29 verbunden ist und beim Verschwenken des Erntevorsatzgerätes 30 von einer Arbeits- in eine Transportbetriebsposition die Verbindung des Erntevorsatzgerätes 30 mit dem Einzugsgehäuse 26 aufrechterhält, wobei das Trägerfahrzeug 2 im Transportbetrieb das Erntevorsatzgerät 30 mittels der Adaptiervorrichtung 33 in eine Transportfahrtrichtung TF zieht. Einerseits sind dadurch Umbauarbeiten bzw. das Lösen des Erntevorsatzgerätes 30 für den Wechsel vom Arbeitsbetrieb in den Transportbetrieb nicht mehr nötig und andererseits ist die Einhaltung der gesetzlichen Limitierungen der Achslast wie auch des 3 Meter Überstandes vom Lenkrad aus in Fahrtrichtung gesehen, auch beim Transport von Erntevorsatzgeräten 30 sehr großer Arbeitsbreite, stets erreichbar, indem dann das Trägerfahrzeug 2 im Transportbetrieb das Erntevorsatzgerät 30 nicht mehr vor sich herschieben muss. Der Aufbau einer Sattelkupplung 32 ist dabei in der DE 3826612 A1 offenbart auf deren Offenbarungsgehalt hier unmittelbar Bezug genommen wird und die mithin Bestandteil der Offenbarung dieser Erfindung werden soll, Um vorteilhaft den vorhandenen Freiraum zu nutzen, ist die Adaptiervorrichtung 33 oberhalb der Einzugsöffnung 35, vorzugsweise mittig auf dem Einzugsgehäuse 26 befestigt. Es liegt im Rahmen der Erfindung, dass die Adaptiervorrichtung 33 aus der Sattelkupplung ähnlichen Kupplungsvorrichtungen gebildet wird.

Um beim Durchfahren von Kurven und Überqueren von Bodenunebenheiten einen sicheren Transportbetrieb zu gewährleisten, ist das Erntevorsatzgerät 30 mittels der Adaptiervorrichtung 33 gleichzeitig um eine vertikale 36 und horizontale Achse 37 verschwenkbar, so dass eine außerordentlich große Wendigkeit im Transportbetrieb erreicht werden kann.

Das in Fig. 1 dargestellte Erntevorsatzgerät 30 ist aus einem Basisteil 38 und über Gelenkpunkte 45 schwenkbar daran befestigte Seitenteile 39, 40 aufgebaut. Zur Erreichung der dargestellten Transportposition ist das Basisteil 38 aus einer Arbeitsbetriebsposition um eine nahezu horizontale und quer zum Trägerfahrzeug orientierte Schwenkachse 37 in vertikaler Richtung schwenkbar angelenkt, wobei während der Schwenkbewegung die Seitenteile 39, 40 zugleich in eine in Transportfahrtrichtung TF weisende Position verschwenkt werden. Im Wesentlichen ist das Basisteil 38 mittig vor und sich über die gesamte Breite des Trägerfahrzeuges 2 erstreckend, angeordnet, so dass einerseits ein wesentlicher Teil der Arbeitsbreite mit einem einteiligen Rahmenaufbau abgedeckt und andererseits die Einkopplung des nicht dargestellten Antriebes vom landwirtschaftlichen Trägerfahrzeug 2 in das Erntevorsatzgerät 30 mit einem solchen Basisteil 38 leichter bewerkstelligt werden kann. In der dargestellten Transportendlage sind die Seitenteile 39, 40 dem Basisteil 38 vorgeordnet und zumindest teilweise unterhalb des Basisteils 38 angeordnet, so dass eine umso stabilere bzw. kippsichere Transportlage realisierbar ist. Im weiteren bleibt die gesetzlich vorgegebene Transportbreite einhaltbar. Zur Erreichung der Schwenkbewegung des Erntevorsatzgerätes 30 um nahezu 90° aus seiner Arbeitsstellung in vertikaler Richtung ist am Einzugsgehäuse 26 beidseitig jeweils eine mit dem Tragrahmen 29 angelenkt verbundene, als Kolben-Zylinder 41 ausgeführte Verstelleinrichtung 42 befestigt. Um die Wendigkeit des gezogenen Erntevorsatzgerätes 30 nicht zu beschränken, ist die Verstelleinrichtung 42 im Transportbetrieb von dem Tragrahmen 29 gelöst. Ferner sind die Schwenkebenen 43 des Basisteils 38 und/oder der Seitenteile 39, 40 in der Transportposition vertikal nach oben gerichtet, so dass das Anbringen von Schutzeinrichtungen wie Seitenplanen oder anderen Abdeckvorrichtungen zum Verkleiden des Erntevorsatzgerätes 40 unterbleiben kann und dem Fahrer 8 ein größerer Aufwand zur Anbringung einer solchen Schutzeinrichtung erspart bleibt. Denkbar ist auch, dass Erntevorsatzgerät 30 einteilig, zweiteilig oder mehr als dreiteilig auszuführen.

Im Weiteren ist dem Erntevorsatzgerät 30 wenigstens ein um eine vertikale Drehachse 46 frei pendelndes und während des Transportbetriebes mit dem Boden in Kontakt stehendes Stützrad 31 zugeordnet ist, so dass das Erntevorsatzgerät 30 auf technisch einfache Weise im Transportbetrieb abgestützt und somit von dem landwirtschaftlichen Trägerfahrzeug ziehbar ist. Zusätzlich wird die Entlastung der Räder 17 des landwirtschaftlichen Trägerfahrzeuges erreicht, so dass beim Befahren einer öffentlichen Straße die Einhaltung der maximal zulässigen Achslasten auch bei Erntevorsätzen großer Arbeitsbreite stets erreichbar ist.

In einer bevorzugten hier nicht dargestellten Ausführungsform finden wenigstens zwei Stützräder 31 Verwendung, die jeweils an den Seitenteilen 39, 40 angebracht sind, so dass die Stützräder 31 auch während des Verschwenkens des Erntevorsatzgerätes 30 von einer Arbeits- in eine Transportbetriebsposition das Erntevorsatzgerät 30 abstützen und in einer möglicherweise vorhandenen, hier nicht vorhandenen Bodenkopiervorrichtung integriert sein können.

Gemäß der Erfindung wird der Auswurfkrümmer 14 in der Transportposition vom Erntevorsatzgerät 30 mittels einer nicht näher dargestellten Abstützvorrichtung abgestützt, damit insbesondere Auswurfkrümmer 14 mit großer Länge im Transportbetrieb nicht mit hohem technischen Aufwand verklappbar oder einziehbar ausgeführt sein müssen.

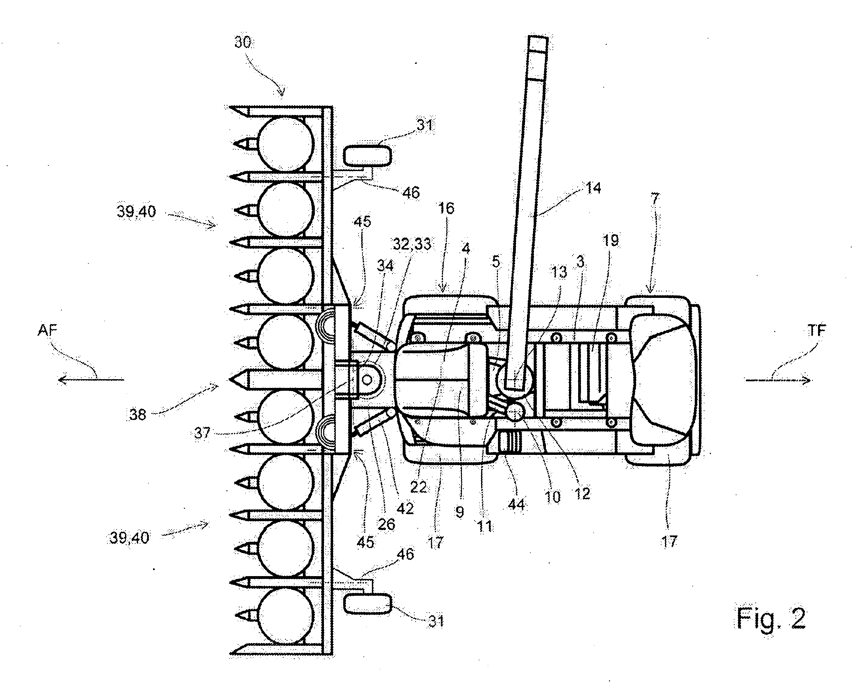

Fig. 2 zeigt eine schematische Draufsicht des als Feldhäcksler 1 ausgeführten landwirtschaftlichen Trägerfahrzeuges 2 mit ausgeklappten Erntevorsatzgerät 30 großer Arbeitsbreite Die Fahrerkabine 4 steht in einer Arbeitsbetriebsposition über die weitere Achseinheit 16 und der Blick des Fahrers 8 ist beim Steuern im Arbeitsbetrieb auf das am Einzugsgehäuse 26 angebrachte Erntevorsatzgerät 30 gerichtet. Gemäß der Erfindung ist dem Trägerfahrzeug 2 wenigstens eine das Erntevorsatzgerät 30 und das Einzugsgehäuse 26 verbindende, als an sich bekannte lösbare Sattelkupplung 32 ausgeführte Adaptiervorrichtung 33 zugeordnet, die über eine horizontal gelagerte Gelenkvorrichtung 34 mit einem mit dem Erntevorsatzgerät 30 in Verbindung stehenden Tragerrahmen 29 verbunden ist, zugeordnet, die beim Verschwenken des Erntevorsatzgerätes 30 von einer Arbeits- in eine Transportbetriebsposition die Verbindung des Erntevorsatzgerätes 30 mit dem Einzugsgehäuse 26 aufrechterhält. Das Erntevorsatzgerät 30 befindet sich im dargestellten Ausführungsbeispiel in einer Arbeitsbetriebsposition. Das Erntevorsatzgerät 30 ragt jeweils seitlich über die Breite des landwirtschaftlichen Trägerfahrzeuges 2 hinaus. Der Schwerpunkt des parallel zur Achseinheit 7, 16 liegenden auseinandergeklappten Vorsatzgerätes 30 liegt im Bereich vor der weiteren Achseinheit 16 außerhalb des Fahrgestells 3 des Trägerfahrzeuges 2. Zur Abstützung ist dem Erntevorsatzgerät 30 jeweils nahe dem seitlichen Ende ein Stützrad 31 zugeordnet, wodurch ein Teil des Gewichts des Erntevorsatzgerätes 30 während des gesamten Arbeitsbetriebes in den Boden eingeleitet werden kann. Infolgedessen wird die weitere Achseinheit 16 erheblich entlastet. Hier nicht dargestellt, können die Stützräder 31 in eine eventuell vorhandene Bodenkopiervorrichtung integriert sein. Über das Erntevorsatzgerät 30, welches das auf dem Feld stehende Erntegut schneidet und zum Einzugsschacht 27 transportiert, wird das Erntegut der nachfolgenden Funktionsbaugruppe 25 zur weiteren Bearbeitung zugeleitet und verlässt diese über den Auswurfschacht 5. Der sich anschließende Auswurfkrümmer 14 leitet das Gut zum Überladen auf hier nicht dargestellte Transportfahrzeuge in die jeweils gewünschte Richtung. In der Arbeitsbetriebsposition wird das landwirtschaftliche Trägerfahrzeug 2 in eine Arbeitsfahrtrichtung AF betrieben und schiebt das Erntevorsatzgerät 30 vor sich her, wobei das Trägerfahrzeug 2 zum Rangieren auch rückwärts in die entgegengesetzte Richtung fahren kann. Beim Positionswechsel der Fahrerkabine 4 und des Auswurfkrümmers 14 aus einer Transportbetriebsposition in eine Arbeitsbetriebsposition und umgekehrt, werden die Fahrerkabine 4 und der Auswurfkrümmer 14 gleichsinnig um den Auswurfschacht 5 herum bewegt. Die Fahrerkabine 4 ist über einen Aufstieg 44 in der Nähe der Achseinheit 16 des Trägerfahrzeuges 2 erreichbar.

Auch wenn die Erfindung lediglich anhand eines Ausführungsbeispiels beschrieben wurde, erschließen sich dem Fachmann im Lichte der vorstehenden Beschreibung sowie der Zeichnung viele verschiedenartige Alternativen, Modifikationen und Varianten, die unter die Erfindung fallen. Des weiteren ist die Erfindung nicht ausschließlich für Feldhäcksler 1 bestimmt. Auch andere selbstfahrende Trägerfahrzeuge 2 wie Mähdrescher, Traktoren, Systemfahrzeuge, etc. können mit einer solchen Adaptiervorrichtung 33 ausgerüstet sein, um im Transportbetrieb andere Vorsatzgeräte 30 zu ziehen.

### Bezugszeichenliste

- 1: Selbstfahrender Feldhäcksler
- 2: Landwirtschaftliches Trägerfahrzeug
- 3: Fahrgestell
- 4: Auswurfschacht
- 5: Fahrerkabine
- 6: Häckseltrommel
- 7: erste Achseinheit
- 8: Fahrer
- 9: Schwenkvorrichtung
- 10: vertikale Drehachse
- 11: Schwenkarm
- 12: Drehkranz
- 13: vertikale Drehachse
- 14: Auswurfkrümner
- 15: horizontale Achse
- 16: weitere Achseinheit
- 17: Räder
- 18: Verbrennungsmotor
- 19: Antriebseinheit
- 20: Getriebe
- 21: Kühlsystem
- 22: vertikale Drehachse
- 25: Funktionsbaugruppe
- 26: Einzugsgehäuse
- 27: Einzugsschacht
- 28: Nachbeschleuniger
- 29: Tragrahmen
- 30: Erntevorsatzgerät
- 31: Stützrad
- 32: Sattelkupplung
- 33: Adaptiervorrichtung
- 34: Gelenkvorrichtung
- 35: Einzugsöffnung
- 36: vertikale Achse
- 37: horizontale Achse
- 38: Basisteil
- 39: Seitenteil
- 40: Seitenteil
- 41: Kolbenzylinder
- 42: \/erstelleinrichtung
- 43: Schwenkebenen
- 44: Aufstieg
- 45: Gelenkpunkt
- 46: vertikale Drehachse

## Patentansprüche

1. Landwirtschaftliches Trägerfahrzeug (2) mit einem Einzugsgehäuse (26) und einem von einer Arbeits- in eine Transportposition verschwenkbaren Erntevorsatzgerät (30) zum Aufnehmen und Weiterführen von Erntegut, wobei das Erntevorsatzgerät (30) aus einem Basisteil (38) und schwenkbar daran befestigten Seitenteilen (39, 40) aufgebaut ist, wobei das Einzugsgehäuse (26) und das Erntevorsatzgerät (30) über wenigstens eine Adaptiervorrichtung (33) miteinander verbunden sind,
**dadurch gekennzeichnet,**
**dass** die wenigstens eine Adaptiervorrichtung (33) ausgelegt ist, beim Verschwenken des Erntevorsatzgerätes (30) von einer Arbeits- in eine Transportbetriebsposition die Verbindung des Erntevorsatzgerätes (30) mit dem Einzugsgehäuse (26) aufrechtzuerhalten und das Trägerfahrzeug (2) im Transportbetrieb das Erntevorsatzgerät (30) mittels der Adaptiervorrichtung (33) in eine Transportfahrtrichtung TF zieht, wobei wenigstens zwei Stützräder (31) mit dem Erntevorsatzgerät (30) in Verbindung stehen, wobei jeweils eines an einem der Seitenteile (39, 40) angeordnet ist, so dass die Stützräder auch während des Verschwenkens des Erntevorsatzgeräts von der Arbeits- in die Transportposition das Erntevorsatzgerät abstützen.

2. Landwirtschaftliches Trägerfahrzeug (2) nach Anspruch 1,
**dadurch gekennzeichnet,**
**dass** sich die wenigstens eine Adaptiervorrichtung (33) oberhalb der Einzugsöffnung (35) des Einzugsgehäuses (26) befindet.

3. Landwirtschaftliches Trägerfahrzeug (2) nach Anspruch 1 oder 2,
**dadurch gekennzeichnet,**
**dass** das Erntevorsatzgerät (30) mittels der Adaptiervorrichtung (33) gleichzeitig um eine vertikale und eine horizontale Achse (36, 37) verschwenkbar ist.

4. Landwirtschaftliches Trägerfahrzeug (2) nach einem der Ansprüche 1 bis 3,
**dadurch gekennzeichnet,**
**dass** die Adaptiervorrichtung (33) als Sattelkupplung (32) ausgeführt ist, welche über eine horizontal gelagerte Gelenkvorrichtung (34) mit einem mit dem Erntevorsatzgerät (30) in Verbindung stehenden Tragerrahmen (29) verbunden ist.

5. Landwirtschaftliches Trägerfahrzeug (2) nach einem der Ansprüche 1 bis 4,
**dadurch gekennzeichnet,**
**dass** dem Erntevorsatzgerät (30) eine diesem gegenüber dem Einzugsgehäuse (26) um nahezu 90° aus seiner Arbeitsstellung hochschwenkbare Verstelleinrichtung (42) zugeordnet ist.

6. Landwirtschaftliches Trägerfahrzeug (2) nach Anspruch 5,
**dadurch gekennzeichnet,**
**dass** die Verstelleinrichtung (42) aus Kolben-Zylindern (41) gebildet ist, die mit ihren Enden am Einzugsgehäuse (26) und am Tragrahmen (29) befestigt sind, wobei die Verstelleinrichtung (42) während des Transportbetriebes vom Tragrahmen (29) gelöst ist.

7. Landwirtschaftliches Trägerfahrzeug (2) nach einem der Ansprüche 1-6,
**dadurch gekennzeichnet,**
**dass** das Basisteil (38) im Wesentlichen mittig vor dem landwirtschaftlichen Trägerfahrzeug (2) angebracht ist.

8. Landwirtschaftliches Trägerfahrzeug (2) nach einem der Ansprüche 1-7
**dadurch gekennzeichnet,**
**dass** sich das Basisteil (38) im Wesentlichen über die gesamte Fahrzeugbreite des landwirtschaftlichen Trägerfahrzeuges (2) in Transportposition erstreckt.

9. Landwirtschaftliches Trägerfahrzeug (2) nach den Ansprüchen 7 bis 8,
**dadurch gekennzeichnet,**
**dass** das Basisteil (38) um eine nahezu horizontale und quer zum Trägerfahrzeug (2) orientierte Schwenkachse (37) in vertikaler Richtung verschwenkbar am Trägerfahrzeug (2) angelenkt ist und wobei während der Schwenkbewegung die Seitenteile (39, 40) zuggleich in eine in Längsrichtung des Trägerfahrzeugs (2) weisende Position verschwenkt werden.

10. Landwirtschaftliches Trägerfahrzeug (2) nach einem der Ansprüche 8 bis 9,
**dadurch gekennzeichnet,**
**dass** in der Transportposition die Seitenteile (39, 40) dem Basisteil (38) vorgeordnet und zumindest teilweise unterhalb des Basisteils (38) angeordnet sind.

11. Landwirtschaftliches Trägerfahrzeug (2) nach einem der Ansprüche 8 bis 10,
**dadurch gekennzeichnet,**
**dass** die Schwenkebenen (43) des Basisteils (38) und/oder der Seitenteile (39, 40) in der Transportposition vertikal nach oben gerichtet sind.

12. Landwirtschaftliches Trägerfahrzeug (2) nach einem der Ansprüche 1 bis 11,
**dadurch gekennzeichnet,**
**dass** dem Erntevorsatzgerät (30) wenigstens ein um eine vertikale Drehachse (46) frei pendelndes Stützrad (31) zugeordnet ist.

13. Landwirtschaftliches Trägerfahrzeug (2) nach einem der Ansprüche 1 bis 12,
**dadurch gekennzeichnet,**
**dass** eine Fahrerkabine (4) vorhanden ist, die aus zumindest einer Arbeitsbetriebsposition in eine Transportbetriebsposition und umgekehrt bewegbar ist.

14. Landwirtschaftliches Trägerfahrzeug (2) nach Anspruch 13,
**dadurch gekennzeichnet,**
**dass** die Änderung der Position durch Verschwenken und/oder Verschieben der Fahrerkabine (4) erfolgt.

15. Landwirtschaftliches Trägerfahrzeug (2) nach einem der Ansprüche 1 bis 14,
**dadurch gekennzeichnet,**
**dass** die Fahrerkabine (4) in der Transportbetriebposition etwa mittig zwischen den Achseinheiten (7, 16) angeordnet ist.

16. Landwirtschaftliches Trägerfahrzeug( 2) nach einem der Ansprüche 1 bis 15,
**dadurch gekennzeichnet,**
**dass** das Erntevorsatzgerät (30) im Wesentlichen im Bereich der zumindest einer ersten Achseinheit (7) angeordnet ist und sich wenigstens eine Antriebseinheit (19) im Bereich der zumindest einen weiteren Achseinheit (16) befindet.

17. Landwirtschaftliches Trägerfahrzeug (2) nach einem der Ansprüche 1 bis 16,
**dadurch gekennzeichnet,**
**dass** der Auswurfkrümmer (14) in der Transportbetriebsposition auf dem Erntevorsatzgerät (30) abgestützt wird.

18. Landwirtschaftliches Trägerfahrzeug (2) nach einem der Ansprüche 1 bis 17,
**dadurch gekennzeichnet,**
**dass** das Trägerfahrzeug (2) als Mähdrescher, Feldhäcksler (1), Systemfahrzeug oder Traktor ausgeführt ist.

## Claims

1. An agricultural tractor vehicle (2) comprising an uptake housing (26) and a harvesting implement (30) pivotable from an operational to a transport position for taking up and conveying harvested crops, the harvesting implement (30) consisting of a base element (38) with side elements (39, 40) pivotally mounted thereto, the uptake housing (26) and the harvesting implement (30) being connected with one another via at least one adapter device (33),
**characterized in**
**that** the at least one adapter device (33) is configured to maintain the connection of the harvesting implement (30) with the uptake housing (26) while the harvesting implement (30) is pivoting from an operational to a transport mode position and in transport mode the tractor vehicle (2) pulls the harvesting implement (30) into a direction of travel for transport TF by means of the adapter device (33), with at least two ground support wheels (31) being in connection with the harvesting implement (30), each being disposed at one of the side members (39, 40) such that the ground support wheels continue to support the harvesting implement even while the harvesting implement is pivoting from the operational to the transport position.

2. The agricultural tractor vehicle (2) according to claim 1, **characterized in that** the at least one adapter device (33) is positioned above the uptake opening (35) of the uptake housing (26).

3. The agricultural tractor vehicle (2) according to claim 1 or 2, **characterized in that** the harvesting implement (30) is concurrently pivotal about vertical and horizontal axes (36, 37) by means of the adapter device (33).

4. The agricultural tractor vehicle (2) according to any of claims 1 to 3, **characterized in that** the adapter device (33) is configured as a fifth wheel coupling (32) which is connected with a carrier frame (29) being in connection with the harvesting implement (30) through a horizontally attached articulated system (34).

5. The agricultural tractor vehicle (2) according to any of claims 1 to 4, **characterized in that** an adjusting linkage (42) that can be pivoted upwardly from its operational position almost 90° relative to the uptake housing (26) is associated with the harvesting implement (30).

6. The agricultural tractor vehicle (2) according to claim 5, **characterized in that** the adjusting linkage (42) is configured of piston cylinders (41) the ends of which are attached to the uptake housing (26) and to the carrying frame (29), the adjusting linkage (42) being detached from the carrying frame (29) during transport.

7. The agricultural tractor vehicle (2) according to any of claims 1 to 6, **characterized in that** the base element (38) is substantially centered in front of the agricultural tractor vehicle (2).

8. The agricultural tractor vehicle (2) according to any of claims 1 to 7, **characterized in that** in the transport position the base element (38) extends substantially across the entire vehicle width of the agricultural tractor vehicle (2).

9. The agricultural tractor vehicle (2) according to claims 7 to 8, **characterized in that** the base element (38) is articulated to the tractor vehicle (2) to be pivotal in the vertical direction about a pivotal axis (37) that is nearly horizontal and oriented transverse to the tractor vehicle (2) and wherein during the pivoting movement the side elements (39, 40) are pivoted while being pulled to a position aligned in the longitudinal direction of the tractor vehicle (2).

10. The agricultural tractor vehicle (2) according to any of claims 8 to 9, **characterized in that** in the transport position the side elements (39, 40) are disposed in front of the base element (38) and at least in part beneath the base element (38).

11. The agricultural tractor vehicle (2) according to any of claims 8 to 10, **characterized in that** the pivoting levels (43) of the base element (38) and/or the side elements (39, 40) are disposed vertically upwardly in the transport position.

12. The agricultural tractor vehicle (2) according to any of claims 1 to 11, **characterized in that** at least one ground support wheel (31) freely floating about a vertical rotational axis (46) is associated with the harvesting implement (30).

13. The agricultural tractor vehicle (2) according to any of claims 1 to 12, **characterized in that** an driver's cabin (4) is provided that can be moved from at least one operational mode position to a transport mode position and vice versa.

14. The agricultural tractor vehicle (2) according to claim 13, **characterized in that** the position is changed by way of pivoting and/or displacing the driver's cabin (4).

15. The agricultural tractor vehicle (2) according to any of claims 1 to 14, **characterized in that** in the transport mode position the driver's cabin (4) is approximately centered between the axle units (7, 16).

16. The agricultural tractor vehicle (2) according to any of claims 1 to 15, **characterized in that** the harvesting implement (30) is substantially disposed in the region of the at least one first axle unit (7) and at least one drive unit (19) is located in the region of the at least one other axle unit (16).

17. The agricultural tractor vehicle (2) according to any of claims 1 to 16, **characterized in that** in the transport mode position the ejector bend (14) is supported on the harvesting implement (30).

18. The agricultural tractor vehicle (2) according to any of claims 1 to 17, **characterized in that** the tractor vehicle (2) is configured as a combine harvester, a forage harvester (1), a system vehicle, or a tractor.

## Revendications

1. Véhicule porteur agricole (2) pourvu d'un dispositif d'alimentation (26) et d'une tête de récolte (30) pivotant d'une position de travail en une position de transport, apte à prendre en charge et à convoyer les récoltes, la tête de récolte (30) se composant d'une base (38) et de pièces latérales (39, 40) montées sur celle-ci de manière pivotante, le dispositif d'alimentation (26) et la tête de récolte (30) étant reliés l'un à l'autre par au moins un dispositif adaptateur (33),
**caractérisé en ce que**
ledit au moins dispositif adaptateur (33) est conçu de telle sorte à maintenir, pendant le pivotement de la tête de récolte (30) d'une position de travail en une position de transport, la liaison entre la tête de récolte (30) et le dispositif d'alimentation (26), et **en ce que** le véhicule porteur (2) tire en mode de transport la tête de récolte (30) au moyen du dispositif adaptateur (33) dans une direction de transport TF, au moins deux roues de support (31) étant reliées à la tête de récolte (30), chacune d'entre elles étant positionnée respectivement au niveau d'une des pièces latérales (39, 40) de telle sorte que les roues de support (31) soutiennent la tête de récolte (30) également pendant le pivotement de la tête de récolte (30) de la position de travail en position de transport.

2. Véhicule porteur agricole (2) selon la revendication 1,
**caractérisé en ce que**
ledit au moins dispositif adaptateur (33) se trouve au-dessus de l'orifice d'alimentation (35) du dispositif d'alimentation (26).

3. Véhicule porteur agricole (2) selon la revendication 1 ou 2,
**caractérisé en ce que**
la tête de récolte (30) peut, au moyen du dispositif adaptateur (33), pivoter en même temps autour d'un axe vertical et d'un axe horizontal (36, 37).

4. Véhicule porteur agricole (2) selon l'une quelconque des revendications 1 à 3,
**caractérisé en ce que**
le dispositif adaptateur (33) est conçu en tant que sellette d'atelage (32), laquelle est reliée par le biais d'un dispositif d'articulation (34) horizontal à un châssis porteur (29) étant lui-même relié à la tête de récolte (30).

5. Véhicule porteur agricole (2) selon l'une quelconque des revendications 1 à 4,
**caractérisé en ce qu'**
est associé à la tête de récolte (30) un dispositif de réglage (42) pouvant être rabattu à partir du dispositif d'alimentation (26) vers le haut à près de 90° de la position de travail de ce dernier.

6. Véhicule porteur agricole (2) selon la revendication 5,
**caractérisé en ce que**
le dispositif de réglage (42) se compose de cylindres et pistons (41) fixés en leurs extrémités au dispositif d'alimentation (26) et au châssis porteur (29), le dispositif de réglage (42) étant détaché du châssis porteur (29) en mode de transport.

7. Véhicule porteur agricole (2) selon l'une quelconque des revendications 1 à 6,
**caractérisé en ce que**
la base (38) est disposée pour l'essentiel dans l'alignement de l'axe central du véhicule porteur agricole (2), sur l'avant de ce dernier.

8. Véhicule porteur agricole (2) selon l'une quelconque des revendications 1 à 7,
**caractérisé en ce que**
la base (38) s'étend pour l'essentiel sur toute la largeur du véhicule porteur agricole (2) en position de transport.

9. Véhicule porteur agricole (2) selon l'une quelconque des revendications 7 à 8,
**caractérisé en ce que**
la base (38) est articulée au véhicule porteur (2) autour d'un axe de pivotement (37) presque horizontal et orienté perpendiculairement au véhicule porteur (2) de telle sorte à pouvoir pivoter à la verticale, les pièces latérales (39, 40) étant basculées en même temps dans une position dans le sens de la longueur du véhicule porteur (2) pendant le mouvement de pivotement.

10. Véhicule porteur agricole (2) selon l'une quelconque des revendications 8 à 9,
**caractérisé en ce que**,
en position de transport, les pièces latérales (39, 40) sont disposées devant la base (38) et au moins en partie en-dessous de la base (38).

11. Véhicule porteur agricole (2) selon l'une quelconque des revendications 8 à 10,
**caractérisé en ce que**,
en position de transport, les plans de pivotement (43) de la base (38) et/ou des pièces latérales (39, 40) sont dirigés à la verticale vers le haut.

12. Véhicule porteur agricole (2) selon l'une quelconque des revendications 1 à 11,
**caractérisé en ce qu'**
au moins une roue de support (31) oscillant librement autour d'un axe de rotation (46) vertical est associée à la tête de récolte (30).

13. Véhicule porteur agricole (2) selon l'une quelconque des revendications 1 à 12,
**caractérisé en ce qu'**
une cabine de conducteur (4) est présente, laquelle est montée mobile pour passer d'au moins une position en mode de travail à une position en mode de transport et inversement.

14. Véhicule porteur agricole (2) selon la revendication 13,
**caractérisé en ce que**
le changement de la position s'effectue par pivotement et/ou par déplacement de la cabine de conducteur (4).

15. Véhicule porteur agricole (2) selon l'une quelconque des revendications 1 à 14,
**caractérisé en ce que**
la cabine de conducteur (4) est disposée, en position en mode de transport, environ au centre des unités d'axe (7, 16).

16. Véhicule porteur agricole (2) selon l'une quelconque des revendications 1 à 15,
**caractérisé en ce que**
la tête de récolte (30) est disposée pour l'essentiel au niveau d'au moins une première des unités d'axe (7) et **en ce qu'**au moins une unité d'entraînement (19) se trouve au niveau d'au moins une autre unité d'axe (16).

17. Véhicule porteur agricole (2) selon l'une quelconque des revendications 1 à 16,
**caractérisé en ce que**
la goulotte articulée (14) s'appuie, en position de mode de transport, sur la tête de récolte (30).

18. Véhicule porteur agricole (2) selon l'une quelconque des revendications 1 à 17,
**caractérisé en ce que**
le véhicule porteur est réalisé en tant que moissonneuse-batteuse, ramasseuse-hacheuse (1), véhicule polyvalent ou tracteur.
